# EUROPEAN PATENT SPECIFICATION

(11) **EP 2 274 668 B1**
(45) Date of publication and mention of the grant of the patent: **07.12.2011**
(21) Application number: 09723631.9
(22) Date of filing: 27.03.2009
(51) Int. Cl.: G06F 3/041, G06F 3/048, G06F 1/16, H05K 5/02, H05K 9/00

(54) **A SECURE KEYPAD SYSTEM**
SICHERES TASTENFELDSYSTEM
SYSTÈME DE CLAVIER SÉCURISÉ

(30) Priority: 27.03.2008 DK 200800449; 27.03.2008 US 39959 P
(43) Date of publication of application: 19.01.2011
(73) Proprietor: CRYPTERA A/S, 2600 Glostrup (DK)
(72) Inventor: CHRISTOFFERSEN, Per, DK-3500 Værløse (DK)
(74) Representative: Plougmann & Vingtoft A/S
(86) International application number: PCT/DK2009/050071
(87) International publication number: WO 2009/118013

(56) References cited:
- EP-A- 0 786 745
- GB-A- 2 180 342
- US-A- 4 355 202
- US-A1- 2002 054 485

## Description

### Field of the invention

This invention relates to key pad systems and keyboard systems for use in environments where data security is of high importance, such as when using an automated teller machine (ATM) or for accessing other personal services.

### Background of the invention

An ATM is a computerized device that provides customers of a financial institution such as a bank with access to financial transactions in a public space without the need for a human clerk or bank teller. On most modern ATMs, the customer is identified by inserting a plastic ATM card with a magnetic stripe or a plastic smartcard with a chip that contains a unique card number and some security information, such as an expiration date. Security is provided by the customer entering a personal identification number (PIN). Using an ATM, customers can access their bank accounts in order to make cash withdrawals (or credit card cash advances) and check their account balances. In ATMs and many other applications security against unauthorised access to the services is of utmost importance. Any input from a user including his PIN must be protected from being revealed to unauthorised persons.

One requirement is that it must be very difficult for unauthorised persons to detect the PIN digits entered. The consequence of this is usually that the electrical signal that are used to sense the keyboard, are protected by tamper-detecting grids. Tamper-detecting grids are becoming more and more expensive because they have to be increasingly sensitive and because the area that has to be covered is increasing, due to the increased security requirements.

US 7 196 694 B2 discloses a touch screen that uses one or more force sensors to determine the location of a touch on the screen.

US 5 241 308 discloses a touch panel supported in discrete locations at its periphery. Strain gauges on the panel respond to forces exerted on the panel by generating signals that are used to determine the position at which a force is applied to the panel. The touch panel may be used as a keypad.

GB 2180342 discloses a touch screen or touch keyboard using force or pressure sensors to measure force applied by the finger to the surface. The force or pressure sensors are electrically connected to a terminal strip using screened leads where appropriate to avoid possible electrostatic or radio frequency interference.

US 4,355,202 discloses a position locating system comprising a force sensing device.

US 2002/054485 discloses an apparatus for shielding an electronic circuit situated on a printed circuit board in an electrically conductive housing which has at least one opening and/or bushing, in which a shielding tube extends from the printed circuit board as far as the housing and encompasses the opening and/or the bushing.

EP 0786745 Discloses a fingerprint sensor package with a tamper-resistant housing for protecting a fingerprint sensor and an encryption output circuit mounted within the housing.

### Summary of the invention

The invention provides a keypad system with a touch sensitive screen having a plurality of distinct fields on a surface thereof, where each field has an associated input value. A plurality of force sensors are coupled to the screen and arranged at individual force sensor locations to sense individual forces in response to the screen being touched and to generate corresponding individual force signals. Identification means are provided for identifying a field being touched based on the force signals, and generating means are provided for generating the input value associated with the field being touched. An electrically conductive, force transmissive, pliable casing encloses the force sensors, the identification means and the generating means.

This arrangement of the invention ensures that only mechanical parts and components are outside the electrically conductive casing whereas all electrical end electronic components and all related electrical signals are contained within the casing whereby it is ensured that no electrical or electro-magnetic signals relating directly the user's operation of the keypad escape the casing. Data representing the user's operation of the keypad can be transmitted out of the casing in an encoded or encrypted form.

### Brief description of the drawings

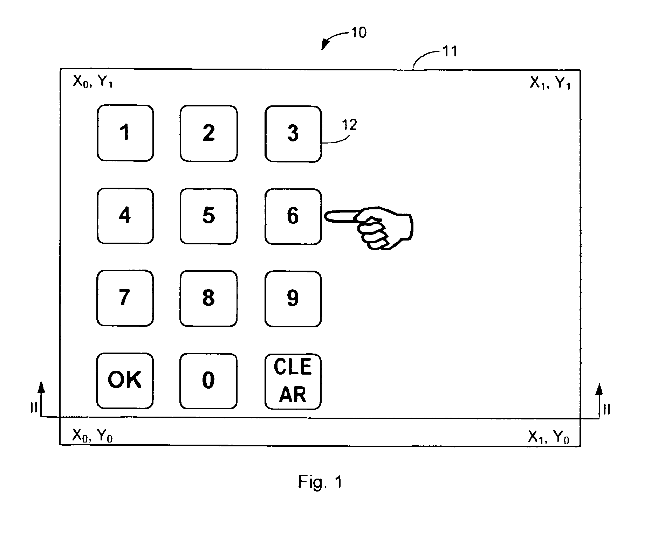

Figure 1 shows a numerical keypad according to the invention;
Figure 2 shows a cross section through the numerical keypad in figure 1 taken along the line II-II; and
Figure 3 shows a cross section through a alternative embodiment of a numerical keypad according to the invention.

### Detailed description of the invention

In the following the invention is described using a numerical keypad as an example. However, the invention may also be embodied in an alphanumeric keyboard or other touch sensitive or pressure sensitive input means.

The figures show a numerical keypad 10. The keypad 10 has a top plate 11 made of a rigid material such as metal, glass or a synthetic material, e.g. a fibre-enforced material. The top plate 11 has a user-accessible surface with a plurality of distinct fields 12 defined thereon. The fields 12 can be defined visibly by printing or engraving or other suitable methods. A tactile definition may also be provided for visually impaired persons. In the shown example there are ten fields 12 each identified by a digit 0-9 and two further fields identified by "OK" and "CLEAR", respectively. The identification by digits 0-9 and "OK" and "CLEAR" is known as such and is used e.g. in ATMs. The digits 0-9 and "OK" and "CLEAR" are input values that are associated with the respective fields.

Below the top plate is a box 13 in which electronic components 14 mounted on a printed circuit board 15. Force sensors 16, 17 such as piezo-electric sensors or strain gauges are mounted on the circuit board 15 and connected to the electronic components 14. The force sensors 16, 17 support the top plate 11 via support members 18, 19 protruding through openings in the box 13. The top plate 11 is supported at three or more, preferably four, locations defining two different directions and thus a two-dimensional coordinate system on the top plate 11. In the shown example the top plate is supported at four locations near the four corners of the top plate which are identified by their X and Y coordinates, (X₀, Y₀), (X₁, Y₀), (X₀, Y₁) and (X₁, Y₁), and individual support members are allocated to each force sensor. The support members 18, 19 support the top plate in locations having the X coordinates X₀ and X₁, respectively. The box 13 is of a material having mechanical properties sufficient for giving proper protection to its content, i.e. a tamper-proof housing. An electrically conductive, force transmissive casing 20 encloses the circuit board 15 with the electronic components 14, and the sensors 16, 17. The casing 20 is preferably a pliable sheet. The electronic components 14 are connectable to the outside of the box 13 as indicated by the arrow 21.

When a user touches a field 12 on the top plate 11 at a point having the coordinates (X, Y) the corresponding force will be transmitted through the four support members to the four force sensors. The individual forces acting on the force sensors depend on the coordinates of the point being touched and the force sensors generate corresponding force signals representing the respective forces on the force sensors. Based on the set of force signals the electronic components 14 calculate the coordinates of the location of the point being touched and thus to identify which one of the fields 12 that has been touched. The electronic components 14 outputs an electrical signal representing the input value associated with the field 12 that has been touched, possibly as a digital signal and in an encrypted form. The top plate 11 thereby functions as a keypad with a touch-sensitive screen that can be used by a user to input numerical values.

The casing 20 constitutes an electrically conducting screen functioning as a Faraday cage enclosing all electrical and electronic components and related electrical signals. The casing 20 provides an effective electromagnetic shield against all outside noise interfering with the keypad system and also prevents electromagnetic signals from escaping outside the casing. Consequently, the stability and reliability of the keypad system is enhanced. The casing 20 is force transmissive whereby forces from the four support members are transmitted through the casing to the respective force transducers. The electrical connection 21 to the outside of the box 13 is made via a leak-proof connection through a proper opening in the casing 20, possibly using a screened cable. In order to prevent detecting the force signals from outside the signals are encoded or encrypted within the corresponding casing 20 so that only encoded or encrypted signals are transmitted via the electrical connection 21 and only encoded or encrypted signals exist outside the casing 20.

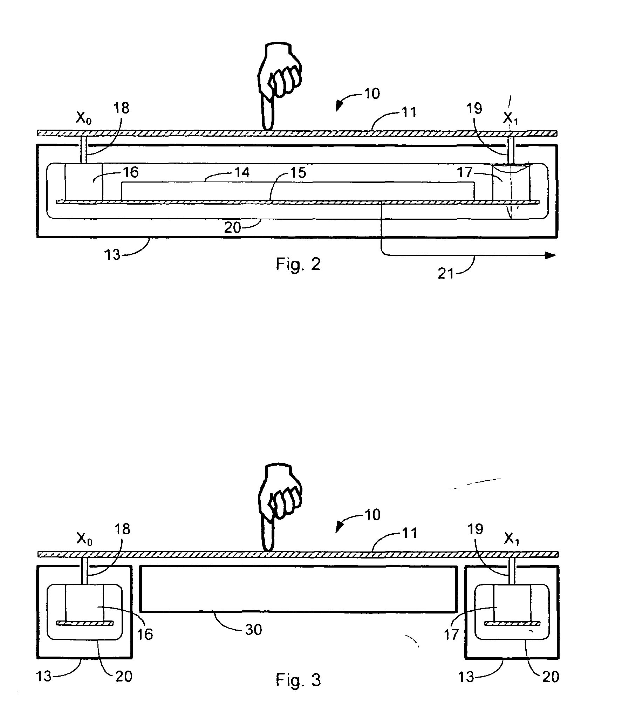

In figure 3 is schematically illustrated a numerical keypad 10 in another embodiment of the invention. Like in figure 2 the force sensors 16, 17 support the top plate 11 via support members 18, 19, and each force sensor is enclosed in an electrically conductive, force transmissive casing 20. For simplicity only the force sensors, the support members and the casing are shown, but further electronic component are also present like in figure 2. In this embodiment the force sensors 16, 17 are arranged in individual boxes 13 placed apart, and the individual force signals generated by the force sensors are preferably transmitted to a common calculating unit or electronic components. In order to prevent detecting the force signals from outside the force signals are encoded or encrypted within the corresponding casing 20 so that only encoded or encrypted signals exist outside the casing.

The arrangement in figure 3 with the force sensors in individual boxes leave a space between the boxes and in this embodiment there is arranged a display screen 30 such as a monochrome or colour flat screen liquid crystal display (LCD). The top plate 11 is a transparent touch sensitive screen, e.g. a glass plate, and the display screen is arranged visibly behind the top plate and can display messages and soft keys to the user. Each soft key on the display screen 30 has a corresponding field 12 on the top glass plate 11 which the user can activate by touching. The layout of the fields 12 can thereby be controlled and changed by a computer or other controller of the display screen 30.

In both embodiments in figures 2 and 3 the keypad system has a tamper-responsive system, e.g. included in the electronic components 14, that detects any attempt of physical attack on the system or other unauthorised handling of it. Such system can detect unauthorised attempts of accessing the interior of the boxes or electrical signals contained therein and can include e.g. a mesh of electrically conducting wires (a so-called security foil) that will be interrupted in case of such attempt, and proper protective actions can be initiated, such as erasing the encryption keys used for encrypting the signals obtained from the force sensors. Security foils can act to shield electromagnetic radiation, and a security foil can therefore be used as a (flexible) casing 20. The "box" 13 can also be a tamper proof housing. Other usable systems exist that respond to an attempt of unauthorised handling of the system.

## Claims

1. A keypad system comprising
- a touch sensitive screen (11) having a plurality of distinct fields (12) on a surface thereof, each field (12) having an associated input value,
- a plurality of force sensors (16, 17) coupled to the screen (11) and arranged at individual force sensor locations (X₀, X₁, Y₀, Y₁) to sense individual forces in response to the screen (11) being touched and to generate corresponding individual force signals,
- identification means (14) for identifying a field (12) being touched based on the force signals,
- generating means (14) for generating the input value associated with the field (12) being touched,
the keypad system being **characterized in that** it further comprises
- an electrically conductive, force transmissive, pliable casing (20) enclosing the force sensors (16, 17), the identification means (14) and the generating means (14), and
- a tamper-responsive system that can detect tampering of the keypad system or unauthorised attempts of accessing the interior of the casing (20).

2. A keypad system according to claim 1 comprising two force sensors (16, 17) and the fields (12) are arranged in a one-dimensional array.

3. A keypad system according to claim 1 comprising at least three force sensors (16, 17) and the fields (12) are arranged in a two-dimensional array.

4. A keypad system according to any one of the preceding claims, wherein the array of fields (12) is indicated on a surface of the touch sensitive screen (11).

5. A keypad system according to any one of claims 1-3, wherein the touch sensitive screen (11) is transparent and a display screen (30) for displaying soft keys is arranged visibly behind the touch sensitive screen (11).

6. A keypad system according to any one of the preceding claims, wherein the tamper responsive system comprises a mesh of electrically conducting wires that will be interrupted in case of unauthorised attempts of accessing the interior of the casing (20).

7. A keypad system according to any one of the preceding claims, wherein the force sensors (16, 17) comprise piezo-electrical sensors.

8. A keypad system according to any one of claims 1-6, wherein the force sensors (16, 17) comprise strain gauges.

9. A keypad system according to any one of the preceding claims, wherein the casing (20) comprises a pliable sheet.

10. A keypad system according to any one of the preceding claims further comprising a box (13) enclosing the force sensors (16, 17), and support members (18, 19) that protrude through openings in the box (13) and support the screen (11).

11. A keypad system according to any one of the preceding claims, wherein the tamper-responsive system is configured to initiate protective actions in case the tamper-responsive system detects tampering of the keypad system or unauthorised attempts of accessing the interior of the casing (20).

12. A keypad system according to any one of the preceding claims, wherein encryption keys are used for encrypting the signals obtained from the force sensors, and the encryption keys are erased in case the tamper-responsive system detects tampering of the keypad system or unauthorised attempts of accessing the interior of the casing (20).

13. A keypad system according to any one of the preceding claims, wherein the casing 20 does not enclose the screen (11).

14. A keypad system according to claim 6, wherein said mesh is the casing (20).

## Patentansprüche

1. Tastenfeldsystem, umfassend
- einen berührungsempfindlichen Bildschirm (11) mit einer Mehrzahl eindeutiger Felder (12) auf einer Oberfläche davon, wobei jedes Feld (12) einen damit verbundenen Eingabewert aufweist,
- eine Mehrzahl Kraftsensoren (16, 17), die mit dem Bildschirm (11) verbunden und an individuellen Kraftsensorpositionen (X₀, X₁, Y₀, Y₁) angeordnet sind, um Einzelkräfte als Reaktion auf die Berührung des Bildschirms (11) zu erfassen und entsprechende Einzelkraftsignale zu erzeugen,
- Identifizierungsmittel (14) zum Identifizieren eines berührten Felds (12) auf der Grundlage der Kraftsignale,
- Erzeugungsmittel (14) zum Erzeugen des mit dem berührten Feld (12) verbundenen Eingabewerts,
wobei das Tastenfeld **dadurch gekennzeichnet ist, dass** es weiterhin umfasst
- ein elektrisch leitfähiges, Kraft übertragendes flexibles Gehäuse (20), das die Kraftsensoren (16, 17), die Identifizierungsmittel (14) und die Erzeugungsmittel (14) einschließt, und
- ein auf Manipulationen reagierendes System, das Manipulationen des Tastenfeldsystems oder unzulässige Versuche, in das Innere des Gehäuses (20) einzudringen, erkennen kann.

2. Tastenfeldsystem nach Anspruch 1, umfassend zwei Kraftsensoren (16, 17), wobei die Felder (12) in einer eindimensionalen Matrix angeordnet sind.

3. Tastenfeldsystem nach Anspruch 1, umfassend mindestens drei Kraftsensoren (16, 17), wobei die Felder (12) in einer zweidimensionalen Matrix angeordnet sind.

4. Tastenfeldsystem nach einem der vorherigen Ansprüche, wobei die Matrix der Felder (12) auf einer Oberfläche des berührungsempfindlichen Bildschirms (11) angezeigt ist.

5. Tastenfeldsystem nach einem der Ansprüche 1-3, wobei der berührungsempfindlichen Bildschirm (11) durchsichtig ist und ein Anzeigebildschirm (30) zum Anzeigen der Softkeys sichtbar hinter dem berührungsempfindlichen Bildschirm (11) angeordnet ist.

6. Tastenfeldsystem nach einem der vorhergehenden Ansprüche, wobei das auf Manipulationen reagierende System ein Gitter aus elektrisch leitfähigen Drähten umfasst, das im Falle von unzulässigen Versuchen, in das Innere des Gehäuses (20) einzudringen, unterbrochen wird.

7. Tastenfeldsystem nach einem der vorhergehenden Ansprüche, wobei die Kraftsensoren (16, 17) piezoelektrische Sensoren umfassen.

8. Tastenfeldsystem nach einem der Ansprüche 1-6, wobei die Kraftsensoren (16, 17) Dehnungsmesser umfassen.

9. Tastenfeldsystem nach einem der vorhergehenden Ansprüche, wobei das Gehäuse (20) ein flexibles Blech umfasst.

10. Tastenfeldsystem nach einem der vorhergehenden Ansprüche, weiterhin umfassend einen Kasten (13), der die Kraftsensoren (16, 17) einschließt, und Trageelemente (18, 19), die durch Öffnungen in dem Kasten (13) herausragen und den Bildschirm (11) tragen.

11. Tastenfeldsystem nach einem der vorhergehenden Ansprüche, wobei das auf Manipulationen regierende System zur Einleitung von Schutzmaßnahmen konfiguriert ist, sofern das auf Manipulationen regierende System eine Manipulation des Tastenfeldsystems oder unzulässige Versuche, in das Innere des Gehäuses (20) einzudringen, erfasst.

12. Tastenfeldsystem nach einem der vorhergehenden Ansprüche, wobei Verschlüsselungscodes zum Verschlüsseln der von den Kraftsensoren erhaltenen Signale verwendet werden und die Verschlüsselungscodes gelöscht werden, sofern das auf Manipulationen regierende System eine Manipulation des Tastenfeldsystems oder unzulässige Versuche, in das Innere des Gehäuses (20) einzudringen, erfasst.

13. Tastenfeldsystem nach einem der vorhergehenden Ansprüche, wobei das Gehäuse (20) den Bildschirm (11) nicht einschließt.

14. Tastenfeldsystem nach Anspruch 6, wobei das Gitter das Gehäuse (20) ist.

## Revendications

1. Système de clavier comprenant
- un écran tactile (11) comportant plusieurs champs (12) distincts sur une de ses surfaces, chaque champ (12) possédant une valeur d'entrée associée,
- plusieurs détecteurs de force (16, 17) couplés à l'écran (11) et disposés à des emplacements de détecteur de force individuels (X₀, X₁, Y₀, Y₁) pour détecter des forces individuelles de réponse lorsque l'écran (11) est touché et pour générer des signaux de force individuels correspondants,
- un moyen d'identification (14) pour identifier un champ (12) qui est touché à partir des signaux de force,
- un moyen de génération (14) pour générer la valeur d'entrée associée au champ (12) qui est touché,
le système de clavier étant **caractérisé en ce qu'**il comprend en outre
- une enveloppe (20) souple électroconductrice, transmettant les forces, contenant les détecteurs de force (16, 17), le moyen d'identification (14) et le moyen de génération (14), et
- un système réactif aux falsifications capable de détecter une falsification du système de clavier ou des tentatives non autorisées d'accès à l'intérieur de l'enveloppe (20).

2. Système de clavier selon la revendication 1 comprenant deux détecteurs de force (16, 17) et dans lequel les champs (12) sont disposés sous forme de matrice unidimensionnelle.

3. Système de clavier selon la revendication 1 comprenant au moins trois détecteurs de force (16, 17) et dans lequel les champs (12) sont disposés sous forme de matrice bidimensionnelle.

4. Système de clavier selon l'une quelconque des revendications précédentes, dans lequel la matrice de champs (12) est indiquée sur une surface de l'écran tactile (11).

5. Système de clavier selon l'une quelconque des revendications 1 à 3, dans lequel l'écran tactile (11) est transparent et un écran d'affichage (30) pour afficher les touches programmables est disposé de façon visible derrière l'écran tactile (11).

6. Système de clavier selon l'une quelconque des revendications précédentes, dans lequel le système réactif aux falsifications comprend un réseau de fils électroconducteurs qui sera interrompu en cas de tentatives non autorisées d'accès à l'intérieur de l'enveloppe (20).

7. Système de clavier selon l'une quelconque des revendications précédentes, dans lequel les détecteurs de force (16, 17) comprennent des capteurs piézoélectriques.

8. Système de clavier selon l'une quelconque des revendications 1 à 6, dans lequel les détecteurs de force (16, 17) comprennent des jauges de contrainte.

9. Système de clavier selon l'une quelconque des revendications précédentes, dans lequel l'enveloppe (20) comprend une feuille souple.

10. Système de clavier selon l'une quelconque des revendications précédentes comprenant également un boîtier (13) contenant les détecteurs de force (16, 17), et des éléments de support (18, 19) qui dépassent par des ouvertures du boîtier (13) et soutiennent l'écran (11).

11. Système de clavier selon l'une quelconque des revendications précédentes, dans lequel le système réactif aux falsifications est configuré pour déclencher des actions de protection si le système réactif aux falsifications détecte une falsification du système de clavier ou des tentatives non autorisées d'accès à l'intérieur de l'enveloppe (20).

12. Système de clavier selon l'une quelconque des revendications précédentes, dans lequel des clés de cryptage sont utilisées pour crypter les signaux provenant des détecteurs de force, et les clés de cryptage sont effacées si le système réactif aux falsifications détecte une falsification du système de clavier ou des tentatives non autorisées d'accès à l'intérieur de l'enveloppe (20).

13. Système de clavier selon l'une quelconque des revendications précédentes, dans lequel l'enveloppe (20) ne contient pas l'écran (11).

14. Système de clavier selon la revendication 6, dans lequel ledit réseau est l'enveloppe (20).
